# EUROPÄISCHE PATENTSCHRIFT

(11) **EP 0 978 437 B1**
(45) Veröffentlichungstag und Bekanntmachung des Hinweises auf die Patenterteilung: **14.05.2003**
(21) Anmeldenummer: 98114685.5
(22) Anmeldetag: 05.08.1998
(51) Int. Cl.: B62B 3/06

(54) **Gabelhubwagen**
Fork lift truck
Chariot élévateur à fourche

(43) Veröffentlichungstag der Anmeldung: 09.02.2000
(73) Patentinhaber: Crown Gabelstapler GmbH, D-81677 München (DE)
(72) Erfinder: Letchworth, David A., La Grange, NC 28551 (US); Letchworth, Kenneth, Snow Hill, NC 28580 (US)
(74) Vertreter: Sandmann, Joachim, Dr.

(56) Entgegenhaltungen:
- US-A- 3 188 107

## Beschreibung

Die Erfindung bezieht sich auf einen Gabelhubwagen mit einem lenkbaren Antriebsteil und einem die Gabelarme aufweisenden Lastteil, der mittels wenigstens einem Hydraulikaggregat anhebbar ist, dessen Zylinder und Kolbenstange zwischen zwei dem Antriebsteil bzw. dem Lastteil zugeordneten Kraftübertragungsteilen angeordnet und jeweils durch ein lösbares Verbindungsteil befestigt sind.

Ein solcher Gabelhubwagen ist allgemein bekannt, siehe z.B. die US-A-3,188,107. Dabei ist das bzw. jedes Hydraulikaggregate durch Bolzen oder Spannstifte, die sich durch den Zylinderboden und das Kolbenstangenende erstrecken, an die Kraftübertragungsteile angeschlossen und in seiner Einbaustellung fixiert.

Bei diesen Bolzenverbindungen besteht der Nachteil, daß bei der Montage der Hydraulikaggregate die Bolzen unter Verwendung eines geeigneten Werkzeugs bis in eine vorbestimmte Stellung eingeschlagen werden müssen, was vergleichsweise aufwendig ist. Ein entsprechender Aufwand entsteht beim Ausbau der Hydraulikaggregate, der bei einem Austausch erforderlich oder im Rahmen von Wartungsarbeiten zweckmäßig sein kann.

Dementsprechend liegt der Erfindung die Aufgabe zugrunde, das bzw. jedes Hydraulikaggregat so anzuschließen, daß es sich auf einfache Weise sowie ohne spezielles Werkzeug montieren und demontieren läßt.

Diese Aufgabe wird erfindungsgemäß dadurch gelöst, wenigstens eines der beiden das Hydraulikaggregat in seiner Einbaulage haltenden Verbindungsteile ein radial in die Verbindungsstellung einschiebbarer Federstecker ist, der dabei auffedert und dann teilweise in eine Ringnut am Zylinder bzw. an der Kolbenstange hineinfedert und teilweise in wenigstens einen Umfangsschlitz eingreift, der in der Ebene der Ringnut in einem Halteteil des Krarfubertragungsteils ausgebildet ist.

Zweckmäßige Ausgestaltungen und Weiterbildungen der Erfindung ergeben sich aus den Unteransprüchen.

Der erfindungsgemäß vorgesehene Federstecker wird durch eine bloße Radialverschiebung gegenüber dem Hydraulikaggregat montiert und demontiert. Dabei sichert die dem Federstecker innewohnende Federkraft die Verbindungsstellung, so daß ein unerwünschtes Lösen ausgeschlossen ist. Vereinfachend wirkt sich auch bei der Montage aus, daß die zu verbindenden Teile nur grob aufeinander ausgerichtet werden müssen, weil beim Zusammenbau der Federstecker selbst die exakte gegenseitige Ausrichtung der zu verbindenden Teile bewirkt. Ferner können die Hubkräfte vom senkrecht angeordneten Hydraulikaggregat direkt unter Umgehung des Federsteckers auf das betreffende Kraftübertragungsteil übertragen werden, so daß der Federstecker nur eine Lagesicherungsfunktion übernehmen muß und entsprechend schwach aber gut handhabbar ausgeführt werden kann. Auch das begünstigt die Montage und Demontage des Hydraulikaggregats.

Ein Ausführungsbeispiel der Erfindung wird nachfolgend anhand einer schematischen Zeichnung näher erläutert. Es zeigen:
- Figur 1: eine perspektivische Teildarstellung eines Gabelhubwagens mit zwei Hydraulikaggregaten unter Weglassung von für das Verständnis der Erfindung unwesentlichen Teilen und
- Figur 2: eine vergrößerte auseinandergezogene Darstellung eines Hydraulikaggregats mit dessen Enden zugeordneten Kraftübertragungsteilen samt Federstecker.

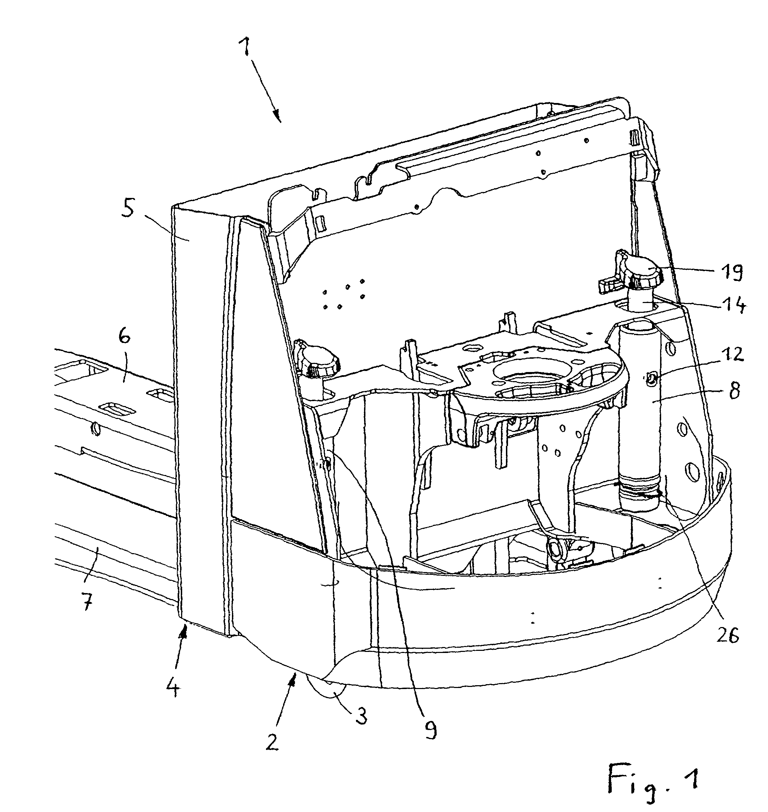

Gemäß Figur 1 weist der Gabelhubwagen 1 einen vordem Antriebsteil 2, der auf Rädern 3 abgestützt verfahrbar ist, und einen hinteren Lastteil 4 auf, von dem das senkrecht aufragende Batteriegehäuse 5 und zwei Gabelarme 6 und 7 (ohne die äußeren Enden) dargestellt sind. Die Gabelarme 6 und 7 weisen nahe ihren hinteren Enden Rollen zur Abstützung auf dem Boden auf.

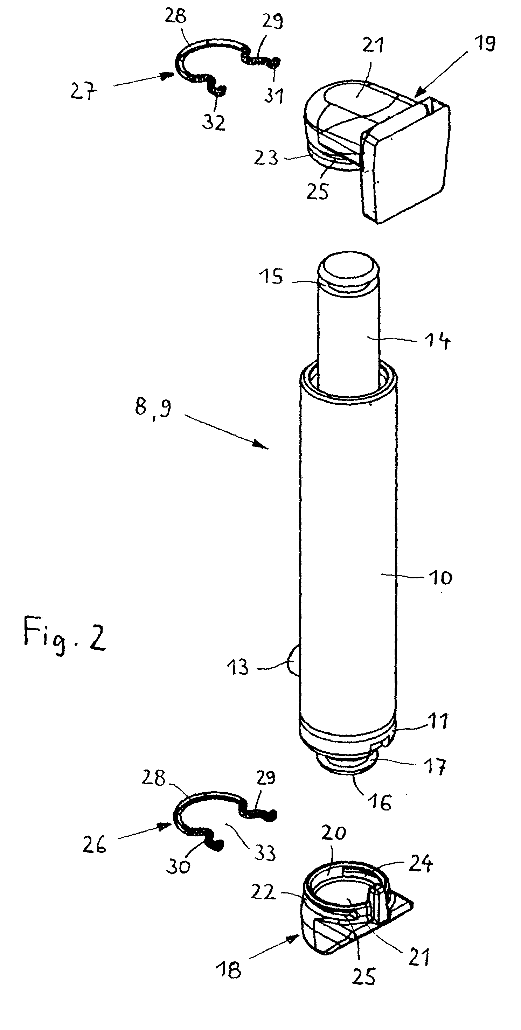

Der Lastteil 4 ist - nach dem Unterfahren einer Palette mit den Gabelarmen 6 und 7 - anhebbar, um die Last vom Boden abheben und mittels des Gabelhubwagens 1 verfahren zu können. Zu diesem Anheben (und Absenken) des Lastteils 4 sind zwei Hydraulikaggregate 8 und 9 vorgesehen, die in senkrechter Anordnung im Antriebsteil 2 untergebracht sind. Die Erfindung liegt in der besonderen Befestigung der Hydraulikaggregate 8 und 9, wobei in beiden Fällen die gleiche Befestigung vorgesehen ist. Dementsprechend gilt die Darstellung gemäß Figur 2 für beide Hydraulikaggregate 8 und 9.

Jedes Hydraulikaggregat 8, 9 weist einen Zylinder 10 mit einem Zylinderboden 11 und Anschlüssen 12, 13 für in Figur 1 nicht eingezeichnete hydraulische Leitungen sowie einen im Zylinder 10 verschiebbaren Kolben mit einer Kolbenstange 14 auf, die aus dem Zylinder 10 herausragt. Das äußere Ende der Kolbenstange 14 ist mit einer Ringnut 15 versehen, und am Zylinderboden 11 ist ein dem Durchmesser der Kolbenstange 14 entsprechender Fortsatz 16 angeformt, der eine entsprechende Ringnut 17 aufweist.

Dem Hydraulikaggregat 8, 9 sind ein dem Antriebsteil 2 zugeordnetes und an diesem befestigtes unteres Kraftübertragungsteil 18 und ein dem Lastteil 4 zugeordnetes und mit diesem verbundenes oberes Kraftübertragungsteil 19 zugeordnet. Die Kraftübertragungsteile 18 und 19 weisen eine einseitig offene zylindrische Bohrung 20 zur Aufnahme des Fortsatzes 16 mit der Ringnut 17 bzw. des mit der Ringnut 15 versehenen Endes der Kolbenstange 14 auf. Eine Stirnfläche 21 schließt jeweils die Bohrung 20 nach außen ab und bildet eine Axialanlage für den Fortsatz 16 des Zylinderbodens 11 bzw. für das Ende der Kolbenstange 14. Dementsprechend ist das montierte Hydraulikaggregat 8, 9 zwischen den beiden Kraftübertragungsteilen 18 und 19 eingespannt und werden die Hubkräfte auf die Stirnflächen 21 übertragen.

An den Kraftübertragungsteilen 18, 19 sind an den einander zugewandten Innenseiten hülsenförmige Halteteile 22 bzw. 23 einstückig angeformt, die mit zwei sich diametral gegenüberliegenden, die Halteteile radial durchsetzenden Umfangsschlitzen 24 und 25 versehen sind, die in der Verbindungsstellung axial auf die Ringnuten 15 bzw. 17 ausgerichtet sind.

Zur Sicherung der Verbindung des unteren Kraftübertragungsteils 18 mit dem Zylinderboden 11 bzw. des oberen Kraftübertragungsteils 19 mit der Kolbenstange 14 sind ein unterer Federstecker 26 und ein oberer Federstecker 27 vorgesehen, die in gleicher Weise als Drahtfeder mit einem etwa kreisbogenförmig gebogenen Mittelabschnitt 28 und zwei nach außen abgebogenen Endabschnitten 29, 30 ausgebildet sind, die jeweils mit einem kleineren Halbbogen 31 bzw. 32 versehen sind. Der kreisbogenförmige Mittelabschnitt 28 weist einen dem Durchmesser des Bodens der Ringnuten 15, 17 angepaßten Innendurchmesser auf und erstreckt sich über etwas mehr als 180°, so daß zwischen den beiden Übergängen vom Mittelabschnitt 28 zum Endabschnitt 29 und zum Endabschnitt 30 eine Federöffnung 33 gebildet ist, deren Weite unter dem Durchmesser des Ringnutbodens liegt.

Zum Zusammenbau wird der Zylinder 10 mit seinem Fortsatz 16 in die Bohrung 20 des unteren Kraftübertragungsteils 18 bis zur Anlage an der Stirnfläche 21 eingeführt. Dann sind die Ringnut 17 und die Umfangsschlitze 24, 25 im unteren Kraftübertragungsteil 18 axial aufeinander ausgerichtet und einander radial benachbart. Nunmehr wird der untere Federstecker 26 in Höhe der Ringnut 17 mit der Federöffnung 33 voraus auf das Halteteil 22 des unteren Kraftübertragungsteils 18 aufgeschoben, wobei der Federstecker 26 durch die Umfangsschlitze 24, 25 hindurch in die Ringnut 17 eingreift. Beim weiteren Vorschieben federt der Federstecker 26 auf und federt schließlich den Fortsatz 16 hintergreifend wieder in die Ringnut 17 zurück. Dann ist der Zylinder 10 durch den teilweise von der Ringnut 17 und teilweise von den Umfangsschlitzen 24, 25 aufgenommenen Federstecker 26 gegenüber dem Halteteil 22 und dem Kraftübertragungsteil 18 fixiert. Zum Lösen wird der Federstecker 26 einfach in umgekehrter Richtung wieder abgezogen.

In entsprechender Weise wird auch die Kolbenstange 14 mittels des oberen Federsteckers 27 am Halteteil 23 des oberen Kraftübertragungsteils 19 durch den oberen Federstecker 27 fixiert und entsprechend bei einer Demontage wieder gelöst.

## Patentansprüche

1. Gabelhubwagen mit einem lenkbaren Antriebsteil (2) und einem die Gabelarme (6, 7) aufweisenden Lastteil (4), der mittels wenigstens einem Hydraulikaggregat (8, 9) anhebbar ist, dessen Zylinder (10) und Kolbenstange (14) zwischen zwei dem Antriebsteil (2) bzw. dem Lastteil (4) zugeordneten Kraftübertragungsteilen (18, 19) angeordnet und jeweils durch ein lösbares Verbindungsteil (26, 27) befestigt sind, **dadurch gekennzeichnet, daß** wenigstens eines der beiden das Hydraulikaggregat (8, 9) in seiner Einbaulage haltenden Verbindungsteile (26,27) ein radial in die Verbindungsstellung einschiebbarer Federstecker (26, 27) ist, der dabei auffedert und dann teilweise in eine Ringnut (15, 17) am Zylinder (10) bzw. an der Kolbenstange (14) hineinfedert und teilweise in wenigstens einen Umfangsschlitz (24, 25) eingreift, der in der Ebene der Ringnut (15, 17) in einem Halteteil (22, 23) des Kraftübertragungsteils (18 bzw. 19) ausgebildet ist.

2. Gabelhubwagen nach Anspruch 1, **dadurch gekennzeichnet, daß** das den Umfangsschlitz (24, 25) aufweisende Halteteil (22, 23) von einem keine Hubkräfte übertragenden Abschnitt des betreffenden Kraftübertragungsteils (18, 19) gebildet ist.

3. Gabelhubwagen nach Anspruch 1 oder 2, **dadurch gekennzeichnet, daß** der Federstecker (26, 27) eine Drahtfeder mit einem gebogenen Mittelabschnitt (28) und zwei anschließenden, nach außen abgebogenen Endabschnitten (29, 30) ist, wobei der Mittelabschnitt (28) sich über mehr als 180° erstreckt und eine Federöffnung (33) bildet, deren Weite unter dem Durchmessser des Bodens der Ringnut (15, 17) liegt.

4. Gabelhubwagen nach Anspruch 3, **dadurch gekennzeichnet, daß** die Endabschnitte (29, 30) der Drahtfeder (26, 27) mit kleinen Halbbögen (31, 32) zum erleichterten Aufspreizen beim Lösen versehen sind.

5. Gabelhubwagen nach Anspruch 3 oder 4, **dadurch gekennzeichnet, daß** die Endabschnitte (29, 30) oder Halbbögen (31, 32) der eingebauten Drahtfeder (26, 27) jeweils in einen von zwei sich im Abstand gegenüberliegenden Umfangsschlitzen (24, 25) des Halteteils (22, 23) eingreifen.

## Claims

1. Fork-lift truck having a steerable drive part (2) and a load part (4) which contains the fork arms (6, 7) and can be raised by means of at least one hydraulic unit (8, 9), of which the cylinder (10) and piston rod (14) are arranged between two power-transmission parts (18, 19), assigned to the drive part (2) and the load part (4), and are each fastened by a releasable connecting part (26, 27), **characterized in that** at least one of the two connecting parts (26, 27), which retain the hydraulic unit (8, 9) in its installed position, is a spring connector (26, 27) which can be pushed radially into the connecting position and, in this case, expands resiliently and then, in part, fits resiliently into an annular groove (15, 17) on the cylinder (10) and on the piston rod (14) and, in part, engages in at least one circumferential slot (24, 25), which is formed in the plane of the annular groove (15, 17) in a retaining part (22, 23) of the force-transmission part (18 or 19, respectively).

2. Fork-lift truck according to Claim 1, **characterized in that** the retaining part (22, 23), which contains the circumferential slot (24, 25), is formed by a section of the relevant power-transmission part (18, 19) which does not transmit any lifting forces.

3. Fork-lift truck according to Claim 1 or 2, **characterized in that** the spring connector (26, 27) is a wire spring with a curved central section (28) and two adjoining, outwardly curved end sections (29, 30), the central section (28) extending over more than 180° and forming a spring opening (33) with an extent which is less than the diameter of the base of the annular groove (15, 17).

4. Fork-lift truck according to Claim 3, **characterized in that** the end sections (29, 30) of the wire spring (26, 27) are provided with small semicircular arcs (31, 32) for easier expansion during release.

5. Fork-lift truck according to Claim 3 or 4, **characterized in that** the end sections (29, 30) or semicircular arcs (31, 32) of the installed wire spring (26, 27) each engage in one of two circumferential slots (24, 25) which are located at a distance opposite one another and belong to the retaining part (22, 23).

## Revendications

1. Chariot élévateur à fourche comprenant une partie d'entraînement (2) articulée et une partie de chargement (4) qui présente les bras de fourche (6, 7) et qui peut être relevée au moyen d'au moins un groupe hydraulique (8, 9) dont le cylindre (10) et la tige du piston (14) sont disposés entre deux parties de transmission de force (18, 19) associées respectivement à la partie d'entraînement (2) et à la partie de chargement (4) et qui sont fixés chacun par une pièce de liaison (26, 27) libérable, **caractérisé en ce qu'**au moins l'une des deux pièces de liaison (26, 27) qui maintiennent le groupe hydraulique (8, 9) dans sa position de montage est un étrier élastique (26, 27) qui peut être enfoncé radialement dans la position de liaison, qui se déploie et s'enfonce alors élastiquement en partie dans une rainure annulaire (15, 17) ménagée sur le cylindre (10) ou sur la tige de piston (14) et qui s'engage en partie dans au moins une fente périphérique (24, 25) qui est réalisée dans une pièce de maintien (22, 23) de la partie de transmission de force (18 ou 19) dans le plan de la rainure annulaire (15, 17).

2. Chariot élévateur à fourche selon la revendication 1, **caractérisé en ce que** la pièce de maintien (22, 23) qui présente la fente périphérique (24, 25) est formée par une partie de la partie de transmission de force (18, 19) concernée qui ne transfère pas de force de levage.

3. Chariot élévateur à fourche selon la revendication 1 ou 2, **caractérisé en ce que** l'étrier élastique (26, 27) est un ressort en fil qui présente une partie centrale (28) courbée à laquelle se raccordent deux parties d'extrémité (29, 30) courbées vers l'extérieur, la partie centrale (28) s'étendant sur plus de 180° et formant une ouverture de ressort (33) dont la largeur est inférieure au diamètre du fond de la rainure annulaire (15, 17).

4. Chariot élévateur à fourche selon la revendication 3, **caractérisé en ce que** les parties d'extrémité (29, 30) du ressort en fil (26, 27) sont dotées de petits demi-cercles (31, 32) pour faciliter leur déploiement lors de leur libération.

5. Chariot élévateur à fourche selon la revendication 3 ou 4, **caractérisé en ce que** les parties d'extrémité (29, 30) ou les demi-cercles (31, 32) du ressort en fil (26, 27) monté s'engagent dans des fentes périphériques (24, 25) respectives, opposées l'une à l'autre et à distance l'une de l'autre, de la pièce de maintien (22, 23).
